# FASCICULE DE BREVET EUROPEEN

(11) **EP 2 582 489 B1**
(45) Date de publication et mention de la délivrance du brevet: **31.12.2014**
(21) Numéro de dépôt: 11735478.7
(22) Date de dépôt: 10.06.2011
(51) Int. Cl.: B23Q 1/54, B23Q 9/00

(54) **PROCÉDÉ DE POSITIONNEMENT À LA NORMALE D'UN AXE DE TRANSLATION D'UN DISPOSITIF DE VÉRIN**
VERFAHREN ZUR NORMALPOSITIONIERUNG EINER ÜBERSETZUNGSACHSE EINER ZYLINDERVORRICHTUNG
METHOD FOR POSITIONING TO THE NORMAL A TRANSLATION AXIS OF A CYLINDER DEVICE

(30) Priorité: 16.06.2010 FR 1054777
(43) Date de publication de la demande: 24.04.2013
(73) Titulaire: European Aeronautic Defence And Space Company Eads France, 75016 Paris (FR)
(72) Inventeur: LE VACON, Philippe, F-78460 Choisel (FR); SUAREZ ROOS, Adolfo, F-75116 Paris (FR)
(74) Mandataire: Deschamps, Samuel
(86) Numéro de dépôt international: PCT/FR2011/051328
(87) Numéro de publication internationale: WO 2011/157933

(56) Documents cités:
- WO-A1-2007/019228
- WO-A2-2010/003847
- US-A1- 2005 265 798
- US-B1- 6 382 889

## Description

### Domaine de l'invention

La présente invention a pour objet un dispositif de positionnement à la normale d'un axe de translation d'un vérin d'un actionneur sur une surface courbe. Le domaine de l'invention s'applique au positionnement de tout type d'outil permettant l'usinage par outil tournant, la dépose de produits de type colle ou mastic, l'inspection par des capteurs, ou toute autre opération nécessaire à la fabrication d'un assemblage de pièces.

De préférence mais non exclusivement l'invention a pour objet un ensemble d'usinage pour l'exécution d'une multiplicité de trous, chacun à un emplacement déterminé dans une surface de structure, telle qu'une cellule d'avion en cours d'assemblage, et plus particulièrement dans ce domaine une machine d'usinage automatisée dont l'axe perçage-alésage nécessite un positionnement précis par rapport à la normale de la surface de structure quelle que soit sa courbure.

L'invention a également pour objet un procédé de positionnement à la normale d'un axe de translation d'un vérin d'un actionneur sur une surface de structure.

L'invention a pour but de normaliser l'axe de perçage-alésage d'une unité de perçage automatisée par rapport à une jonction d'une zone de recouvrement présentant une double courbure de sorte à percer un trou qui soit sensiblement normale de la surface de la jonction.

### Etat de la technique

Actuellement, lorsqu'un grand nombre de perçages est nécessaire, avec un positionnement très précis de chacun d'eux, par exemple en aéronautique, il est connu de faire appel à un ensemble d'usinage comportant une grille de perçage qui définit précisément la position des trous à réaliser. Une telle grille de perçage est un gabarit qui est fixé sur la pièce, ou immobilisé au voisinage de ladite pièce présentant une ouverture de réception d'une machine d'outillage. L'axe de l'ouverture correspond à la direction d'avance d'un outil rotatif de la machine d'outillage, foret par exemple, approprié à l'exécution du trou.

Ce type de grille de perçage, connu dans l'état de la technique, est notamment décrit dans le document FR 2 933 323. Ce document décrit un ensemble d'usinage dont la machine d'outillage est montée sur deux unités de translation de la grille par l'intermédiaire d'un chariot. Les deux unités de translation, suivant respectivement un axe x et un axe y sécants, autorisent un déplacement dans un plan de la machine d'outillage par rapport à la grille.

Ce type de grille de perçage est bien adapté pour un panneau à simple courbure. Ces panneaux sont dits 'développables', et présentent une génératrice rectiligne impliquant qu'ils peuvent être ' déroulés ' sur un plan.

En revanche, les panneaux à double courbures, tels que les panneaux de fuselage du cockpit d'un aéronef, ne sont pas ' développables ' et ne disposent donc pas de génératrice rectiligne, c'est-à-dire qu'ils ne peuvent pas être ' déroulés ' sur un plan. Effectivement, ils présentent une première courbure, par exemple dans la direction longitudinale du panneau, ainsi qu'une seconde courbure distincte de la première, par exemple dans la direction transversale de ce même panneau. Par conséquent, l'axe de perçage de la machine d'outillage n'est pas positionné à la normale de la surface à percer. Les trous de fixation ainsi produits ne seront pas toujours perpendiculaires à la surface de la pièce à chaque point de perçage entrainant ainsi un défaut d'uniformisation des caractéristiques de perçage nécessaires pour garantir l'étanchéité des assemblages et respecter les spécifications de fabrication.

Pour résoudre ce problème, il est connu d'utiliser une grille de perçage utilisable pour une configuration d'usinage prédéfinie d'une pièce à percer. Cette grille comporte une multiplicité de canons guides de perçage, chacun associé à un trou particulier suivant un motif prédéterminé. Par conséquent, une autre configuration d'usinage nécessite donc la conception et la réalisation d'une grille de perçage dédiée. Ceci conduit généralement à une gestion complexe d'un nombre de grilles de perçage important, notamment du fait que celles-ci doivent subir des contrôles de qualité et être entretenues.

En outre, ce type de grille de perçage doit être positionné manuellement de façon très précise par rapport à la pièce. Si tel n'est pas le cas, les alésages ne sont pas réalisés à des positions correctes et la pièce doit généralement être rebutée. La pose et la dépose de la machine d'outillage sur la grille de perçage nécessitent des manipulations (mise en place, verrouillage, vérifications avant de réaliser la séquence d'alésage, etc.) par l'opérateur qui limitent la vitesse de réalisation des opérations d'alésage et donc les cadences de production. Et du fait du nombre important de trous à percer, le processus de perçage devient difficile et laborieux pour un opérateur.

Il est connu le document US 5 848 859 qui propose une solution pour aligner l'axe de perçage à la normale de la surface à percer. Ce document divulgue une machine d'outillage comprenant une unité de perçage automatisée commandant le déplacement d'une perceuse. Cette perceuse comporte un corps relié de manière pivotante à une tête de contact avec la surface de la pièce à percer. Lorsque, la tête entre en contact avec la surface de la pièce à un point de perçage, elle pivote autour dudit point jusqu'à ce que l'axe de perçage et l'axe de pivotement soient alignés, à l'aide de mesures de déviation fournies par des capteurs, de sorte que le trou soit percé à la normale du plan de la pièce. La perceuse comporte des moyens de déplacement en translation et en rotation de la tête flexible autour du point de perçage.

Toutefois, la solution préconisée par ce document présente des inconvénients. En effet, ce type de solution, en outre de mettre en oeuvre des moyens complexes, nécessite un positionnement très précis de la tête de perceuse au point de perçage, sous peine d'avoir des alésages à des positions erronées. Comme la courbure de la pièce à percer n'est pas connue au préalable, la précision du positionnement de la tête de perceuse est garantie à condition d'une part de ne pas glisser, et d'autre part de corriger la normalité par une boucle d'asservissement dynamique.

Ainsi, il existe aujourd'hui un besoin de trouver une machine d'outillage comportant des moyens simples d'alignement de l'axe de perçage à la normale de la surface de la pièce, quelle que soit la courbure de ladite surface, tout en garantissant une précision suffisante de positionnement de la tête de perceuse par rapport au point de perçage.

On connaît dans l'état de la technique le brevet américain n°6 382 889 qui décrit un dispositif portable de perçage multiaxe. Ce dispositif comporte en outre, un vérin mobile en translation asservi a des moteurs régissant les mouvements de rotation du vérin.

### Exposé de l'invention

L'invention a justement pour but de répondre à ce besoin tout en remédiant aux inconvénients des techniques précédemment citées. Pour ce faire, l'invention a pour objet un dispositif de vérin muni de moyens d'auto-positionnement de l'axe de perçage à une position normale d'une surface de contact de la tête du vérin.

Ce dispositif de vérin est particulièrement adapté pour des ensembles d'usinage comportant une machine d'outillage munie d'une tel dispositif de vérin. L'ensemble d'usinage comporte une grille numérique de perçage apte à être solidarisée à la pièce en position repérée. La grille comporte deux axes de translations en X et Y asservis en position. La machine d'outillage montée sur la grille comporte un troisième axe Z de translation, non asservi, confondu avec l'axe de perçage. Les moyens d'auto-positionnement sont configurés de sorte à permettre l'alignement de l'axe Z de perçage à la normale de la surface de la pièce par un simple déplacement en translation dudit axe.

L'ensemble d'usinage comporte en outre des moyens de génération d'une pression suffisante à la périphérie du trou à percer afin de garantir un perçage sans bavure à l'inter tôle, lorsque l'axe Z de perçage est à la normale de la surface du trou à réaliser.

Le fonctionnement de l'ensemble d'usinage est exécuté à l'aide d'un procédé mis en oeuvre par une unité de traitement. L'unité de traitement comporte des moyens de détermination d'une position de verrouillage de la machine d'outillage sur la grille. Cette position de verrouillage est déterminée de sorte que sa projection normale à la surface de la pièce soit le centre du trou à réaliser. Cette détermination est effectuée en fonction d'un ensemble de données d'ingénierie comprenant des données relatives à la courbure des pièces à percer, des emplacements des trous sur lesdites pièces et des caractéristiques des moyens d'auto-positionnement.

Lors du processus de perçage, la courbure de la pièce étant connue à l'avance, la machine d'outillage est pré-positionnée en conséquence à la position de verrouillage déterminée. Les moyens d'auto-positionnement alignent l'axe de perçage à la normale de la surface de la pièce par un simple déplacement par translation de la machine d'outillage vers le point de perçage. Ensuite, le dispositif de pressage génère un effort de compression suffisant à la périphérie du trou à percer.

L'invention permet ainsi de garantir l'alignement de l'axe de perçage par rapport à la normale du trou à percer de façon passive et mesurable. Avec l'invention, il n'est par conséquent pas nécessaire de mettre en place des moyens de correction active, du type asservissement en position angulaire, de l'alignement de l'axe de perçage par rapport à la normale du trou à percer.

Un autre avantage de l'invention est qu'il n'est pas non plus nécessaire de mettre en place des moyens de détermination très précis de la position de la tête de perceuse, du fait d'une part que la courbure des pièces est connue à l'avance et que le point de verrouillage est éloigné du point de perçage permettant ainsi un glissement maîtrisé de la machine d'outillage.

Le fait de supprimer de la machine d'outillage notamment les moyens d'asservissement dynamique permet :
- de réduire la complexité de fabrication de l'unité de perçage automatisé,
- de réduire le nombre et la complexité des différentes opérations d'alésage, et
- d'augmenter les cadences de production.

L'invention fournit ainsi une machine d'outillage non asservie légère et peu encombrante adaptée à une grille numérique de perçage, notamment pour des pièces de fuselage ou des sous-ensembles d'aéronefs, qui permet un travail sur un grand champ d'action, avec une précision élevée tant en ce qui concerne son positionnement par rapport au point de perçage qu'en ce qui concerne l'exécution du travail de perçage proprement dit sur des surfaces planes ou courbes.

Un autre objectif de l'invention est de fournir une machine d'outillage conservant une structure relativement simple et n'impliquant pas des opérations de maintenance trop lourdes.

L'invention a donc pour objet un dispositif de vérin comportant un corps de vérin et une tige solidaire d'un piston mobile en translation suivant un axe Z de translation,
caractérisé en ce qu'il comporte
- des moyens de pivotement de l'axe Z autour de deux axes pivots sécants montés sur le corps du vérin,
- un multipode, destiné à entrer en contact avec une surface d'une structure,
- ledit multipode étant positionné par rapport à la tige du vérin de sorte à les maintenir coaxiaux,
- le multipode étant en outre couplé à ladite tige par l'intermédiaire de moyens de compliance, selon l'axe Z,
- les moyens de pivotement et les moyens de compliance sont configurés de sorte à aligner l'axe Z à la normale de la surface de la structure, lors d'un déplacement du piston suivant l'axe Z.

Avantageusement, l'invention est également caractérisée en ce que les moyens de compliance sont en matériau souple ou au moins déformable du type ressorts de compression.

Avantageusement, l'invention est également caractérisée en ce que les moyens de pivotement comportent un disque monté concentriquement sur le corps du vérin, ledit disque étant couplé au vérin par le premier axe pivot fixe par rapport audit corps du vérin et par le second axe pivot fixe par rapport audit disque, ledit disque est monté pivotant sur un support du vérin par rapport au premier axe.

Avantageusement, l'invention est également caractérisée en ce qu'il comporte en outre des moyens de centrage configurés de sorte à limiter l'angle de pivotement du vérin par rapport au support du vérin afin de maintenir l'axe Z centré, quelle que soit l'orientation spatiale dudit dispositif.

Les moyens de centrage peuvent comporter :
- une première fourche montée sur le support suivant le premier axe pivot fixe, ladite fourche comportant deux branches enserrant un plot de centrage monté sur un bras fixé sur le disque et
- une seconde fourche montée sur le disque suivant le second axe pivot fixe, ladite fourche comportant deux branches enserrant un plot de centrage fixé sur le corps du vérin.

Les moyens de centrage peuvent aussi être réalisés avec des vérins pneumatiques opposés.

Avantageusement, l'invention est également caractérisée en ce que le multipode est un quadripode dont les pieds sont en téflon.

L'invention a également pour objet un ensemble d'usinage pour l'exécution d'une multiplicité de trous, chacun à un emplacement déterminé dans une surface d'une structure, telle que cellule d'avion en cours d'assemblage, comportant :
- une grille de perçage apte à être solidarisée à la structure en position repérée, ladite grille comportant un chariot, une unité de translation en X asservie en position assurant un mouvement libre en translation du chariot suivant une première direction dite axe x, une unité de translation en Y asservie en position assurant un mouvement libre en translation de l'unité de translation en X et du chariot suivant une seconde direction dite axe y, l'axe x et l'axe y étant sécants, des moyens de verrouillage des mouvements libres de translation respectivement suivant l'axe x et suivant l'axe y, et
- une machine d'outillage monté sur ledit chariot,
caractérisé en ce que la machine d'outillage comporte le dispositif de vérin de l'invention.

Avantageusement, l'invention est également caractérisée en ce que la tige du vérin comporte un corps cylindrique creux traversé par une tige centrale présentant une tête d'usinage.

L'invention a également pour objet un procédé de positionnement à la normale d'un axe de translation du dispositif de vérin sur la surface de la structure, dans lequel :
- on déplace le dispositif de vérin en translation suivant l'axe Z,
- une rotation instantanée du dispositif de vérin se produit selon les deux axes pivots, lorsqu'au moins deux des pieds du multipode sont en contact avec la surface de la structure,
- cette rotation force, par effet de glissement des deux pieds en contact, l'orientation de l'axe Z à la normale de la surface de la structure.

Avantageusement, l'invention est également caractérisée en ce que :
- on détermine des emplacements des points de perçage sur la structure,
- on détermine pour chaque point de perçage un point de verrouillage associé dont sa projection normale, de la grille de perçage sur la surface de la structure, est le centre dudit point de perçage,
- le point de verrouillage est la position du chariot où les moyens de verrouillage sont en position dite position verrouillée dans laquelle le mouvement suivant les axes x et y sont bloqués,
- on guide le chariot à la position de verrouillage, puis on déplace le dispositif de vérin en translation suivant l'axe Z, et
- on applique un effort de compression prédéfini, avant l'étape de perçage et lorsque l'axe Z est à la normale du point de perçage, de sorte à garantir un perçage sans bavure.

L'invention a également pour objet un actionneur comportant le dispositif de vérin de l'invention.

### Brève description des dessins

L'invention sera mieux comprise à la lecture de la description qui suit et à l'examen des figures qui l'accompagnent. Celles-ci sont présentées à titre indicatif et nullement limitatif de l'invention.
La figure 1 montre une représentation schématique d'une grille de perçage numérique d'un ensemble d'usinage, selon un mode de réalisation de l'invention.
Les figures 2 et 3 montrent une représentation schématique d'une vue en perspective d'une machine d'outillage de l'ensemble d'usinage, selon un mode de réalisation de l'invention.
La figure 4 montre une représentation schématique d'une vue éclatée de deux axes de pivot montés sur un vérin de la machine d'outillage, selon un mode de réalisation de l'invention.
La figure 5 montre une représentation schématique de la partie inférieure de la machine d'outillage montée sur un chariot de la grille, selon un mode de réalisation de l'invention.
La figure 6 montre une représentation schématique d'une vue en coupe d'un quadripode monté sur le vérin, selon un mode de réalisation de l'invention.
La figure 7 montre une représentation schématique de l'ensemble d'usinage commandé par une unité de traitement, selon un mode de réalisation de l'invention.
La figure 8 montre une représentation graphique de la détermination d'une position de verrouillage du chariot sur la grille par rapport au point de perçage, selon un mode de réalisation de l'invention.
Les figures 9a à 9f et 10 montrent une illustration d'étapes de fonctionnement de l'ensemble d'usinage selon un mode de réalisation de l'invention.

### Description détaillée de modes de réalisation de l'invention

Le dispositif de vérin de l'invention est un ensemble compact et de faible masse, dépourvu de tout asservissement en position et fonctionnant en mode tout ou rien. Il est utilisable sur tout type d'installation nécessitant ce type de fonction.

Les figures ci-après montrent une utilisation du dispositif de vérin de l'invention dans le cadre d'un ensemble d'usinage muni d'une grille de perçage et d'une machine d'outillage, en configuration pneumatique.

Dans la description, les mêmes références numériques désignent d'une figure à l'autre des éléments identiques ou fonctionnellement semblables.

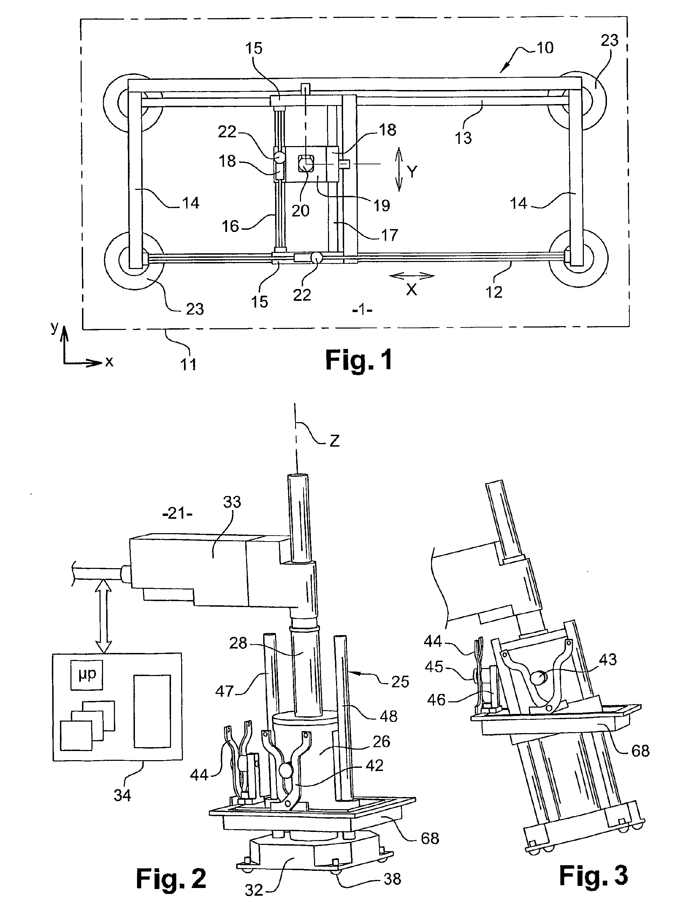

La figure 1 montre une représentation schématique d'un ensemble d'usinage 1 comportant une grille 10 de perçage numérique. Cette grille 10 est constituée d'une plaque métallique, conformée pour pouvoir être fixée sur la surface d'une structure 11 à percer qui est ici plan.

Dans la description, on entend par « structure » une pièce seule, ou une pluralité de pièces assemblées ou positionnées les unes par rapport aux autres en vue d'opérations d'assemblage.

La grille 10 comporte une unité de translation en X et une unité de translation en Y. Les unités de translation en X et en Y sont orientées respectivement suivant deux directions dites axes x et y, lesdits axes x et y étant sécants et de préférence orthogonaux. Dans les modes de réalisation ci-dessous décrits, la longueur de l'unité de translation en X, prise suivant l'axe x, est sensiblement plus grande que celle de l'unité de translation en Y, prise suivant l'axe y.

L'unité de translation en X comprend deux rails 12 et 13, par exemple de sections cylindriques. Les deux rails 12 et 13 sont parallèles à l'axe x. Ils sont raccordés entre eux au niveau de leurs extrémités par des éléments 14, de préférence rigides, par exemple parallèles à l'axe y et de longueurs voisines de celle de l'unité de translation en Y. Chaque rail 12 et 13 est muni d'un coulisseau 15 apte à être déplacé dans les deux sens le long dudit rail considéré suivant l'axe x entre les éléments 14 rigides.

L'unité de translation en Y comprend deux rails 16 et 17, par exemple de sections cylindriques, parallèles à l'axe y dont les extrémités sont solidaires des deux coulisseaux 15 de sorte que l'unité de translation en Y, est apte à coulisser suivant l'axe x. Dans un mode de réalisation, les rails 16 et 17 sont solidarisés avec les coulisseaux 15 de manière temporaire. Un accouplement magnétique peut dans ce cas être utilisé. Dans un autre mode de réalisation, la solidarisation est permanente par exemple par soudure, vis ou autres. Les différents éléments solidarisés forment en outre un ensemble rigide et indéformable dans des conditions normales d'utilisation.

Chaque rail 16 et 17 de l'unité de translation en Y est muni d'un coulisseau 18 apte à être déplacé dans les deux sens le long dudit rail considéré suivant l'axe y entre les coulisseaux 15 de l'unité de translation en X.

Dans l'exemple de la figure 1, la grille 10 présente une forme rectangulaire de par ses unités de translations. Dans d'autres modes de réalisation, la forme de la grille peut être carrée, triangulaire ou autres selon les modes d'utilisation. En outre, chacun desdits rails peut présenter une courbure différente pour être adapté à des courbures de la pièce 11.

La grille 10 comporte un chariot 19 solidaire des deux coulisseaux 18 de l'unité de translation en Y. Le chariot 19 comporte une ouverture 20 destinée à recevoir au moins partiellement une tête 30 d'usinage d'une machine 21 d'outillage, représentée plus en détail aux figures 2 et 3. Le chariot 19 coulisse librement suivant l'axe x, par déplacement de l'unité de translation en Y, et suivant l'axe y sous l'action d'une force extérieure à la grille 10, appliquée par un opérateur au chariot 19 ou à la machine 21 d'outillage.

La grille 10 comporte des moyens de verrouillage 22 du déplacement de l'unité de translation en Y et du chariot 19. Les moyens de verrouillage 22 sont montés sur un des deux rails ou sur les deux rails de l'unité de translation correspondante. Ces moyens de verrouillage 22 autorisent une première position dite position déverrouillée dans laquelle le déplacement suivant l'axe considéré est libre, et une seconde position dite position verrouillée dans laquelle le déplacement suivant l'axe considéré est bloqué quelle que soit la position du chariot 19 suivant l'axe considéré.

Les moyens de verrouillage 22 sont par exemple des unités de blocage pneumatique, ou des freins, ou tout autre moyen permettant de bloquer le mouvement libre du chariot 19.

La grille 10 est fixée à la pièce 11 par l'intermédiaire de ventouses 23 rigides destinées à assurer un positionnement rigide de ladite grille sur ladite pièce. Dans un mode de réalisation préféré, les ventouses 23 au nombre de 4 sont placées aux extrémités des éléments 14 rigides de l'unité de translation en X, tel que représenté sur la figure 1. Dans une variante, une seule ventouse 23 est placée au centre de la grille 10. Ces ventouses 23 comportent une étanchéité périmétrique au contact de la surface de la pièce 11 et leurs cavités sont maintenues en dépression de façon continue.

Dans un autre mode de réalisation, la grille 10 est fixée à la pièce 11 par l'intermédiaire d'épingles mécaniques.

La machine d'outillage 21 qui vient compléter la grille 10 pour constituer l'ensemble d'usinage 1 est spécialisée dans une opération particulière d'usinage des trous. Ces opérations sont différenciées, soit par le diamètre et la profondeur du trou à réaliser, soit par la nature de l'opération et de l'outil à mettre en oeuvre, par exemple perçage avec un foret, ébauche d'alésage avec une tête à aléser ou finition d'alésage. L'ensemble d'usinage peut être utilisé pour effectuer des séquences opératoires, notamment pour réaliser un contrôle non-destructif, des assemblages (insertion fixation, sertissage, etc.) ou tout autre typé d'opération d'usinage (fraisage, perçage, alésage etc.).

Il est considéré dans la suite de la description que la machine d'outillage 21 permet de réaliser plusieurs alésages dans la pièce 11.

Comme le montre les figures 2 et 3, la machine 21 d'outillage se solidarise, par sa partie inférieure, sur l'ouverture 20 du chariot 19.

Les termes haut, bas, supérieur et inférieur s'entendent par rapport au sens de déplacement de la machine 21 d'outillage et à la position de perçage.

La machine 21 d'outillage comporte un dispositif de vérin 25 comprenant un corps 26 de vérin cylindrique dans lequel coulissent un piston 27 et une tige 28 solidaire du piston, sous l'action d'une pression hydraulique ou pneumatique, qui dans le cas d'une perceuse pneumatique est, avantageusement, une pression pneumatique.

Un axe Z de la tige 28 est confondu avec un axe de perçage. Pour ce faire, la tige 28 comporte un corps cylindrique creux s'étendant selon un axe d'allongement et comportant une face d'appui destinée à venir au contact de la surface de la =structure 11. La tige 28 comporte une tige 29 centrale traversant le corps creux 28 et présentant une portion localisée à l'intérieur dudit corps creux munie d'une tête 30 d'usinage qui est ici une tête de perçage.

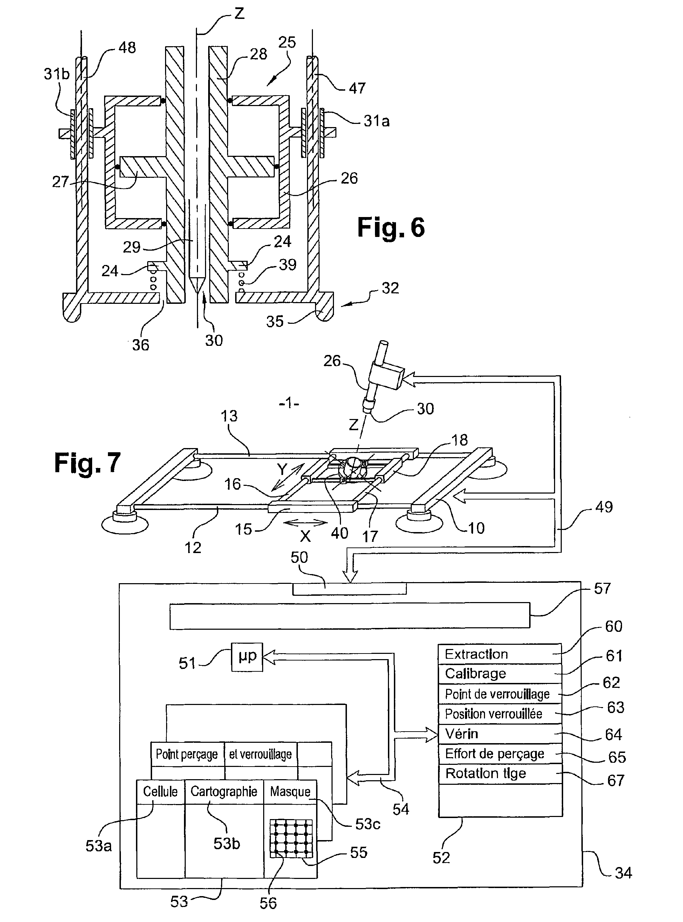

Le corps 26 du vérin 25 est fixe en z et articulé en θ et β sur le chariot 19. Le corps du vérin comporte solidairement à sa périphérie deux anneaux de guidage 31a, 31b (illustrés à la figure 6). Ces deux anneaux 31a et 31b sont situées en regard l'un de l'autre. Chaque anneau 31a, 31b est apte à accueillir respectivement un axe de guidage 47, 48 de sorte à former un coulisseau.

Les deux axes de guidage 47, 48 sont montés coulissant par rapport à l'axe Z du vérin 25. Les deux axes de guidage 47 et 48 sont également fixés à un multipode 32. Dans l'exemple illustré aux figures 2 et 3 ce multipode 32 est un quadripode. Ce multipode 32 est situé sur la partie inférieure de la machine 21 d'outillage. Les axes de guidage 47 et 48 sont configurés de sorte à guider parfaitement le multipode 32 selon l'axe Z de la tige 28 du vérin 25.

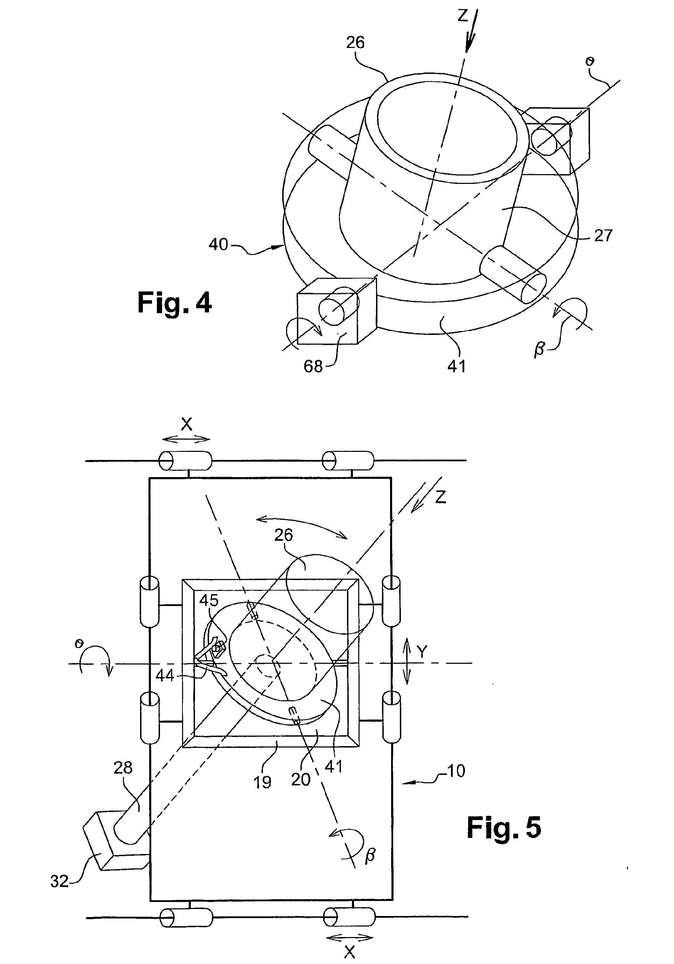

La tige 28 du vérin 25 supporte à son extrémité distale du multipode 32 une unité de perçage automatisé 33 (UPA). L'unité de perçage 33 (UPA) de structure classique comporte notamment un arbre (non représenté) monté en rotation. La rotation de cet arbre est commandée par une unité 34 de traitement, représentée en détail à la figure 5. L'arbre de l'UPA 33 est monté solidairement et de manière coaxiale à la tige 29 centrale, de sorte que la rotation de l'arbre, entraine la rotation de la tige 29. Ainsi, l'articulation du vérin 25 est totalement indépendante du mouvement combiné de rotation de la tige 29 et de la translation de l'UPA 33.

Une vue en coupe d'un exemple de multipode est représentée à la figure 6. Dans cet exemple, le multipode est un quadripode 32 comportant une embase 35 de section circulaire ou parallélépipédique ou autres comportant en son centre un alésage 36 apte à recevoir la partie inférieure 37 de la tige 28 du vérin. Le quadripode 32 comporte quatre pieds 38 destinés à entrer en contact avec la surface de la structure 11 à percer. Les pieds 38 sont réalisés, de préférence, avec un matériau ayant un faible coefficient de frottement. Dans un exemple, les pieds 38 sont en téflon.

Le quadripode 32 est bien adapté pour la jonction d'une zone de recouvrement présentant une double courbure car au moins trois des pieds 38 seront en contact avec la surface de la pièce 11.

Le quadripode 32 est positionné par rapport à la tige 28 de sorte à les maintenir coaxiaux. Ce positionnement du quadripode 32 permet un guidage parfait de son axe par rapport à l'axe Z du vérin 25. Le quadripode 32 est en outre couplé à la tige 28 du vérin par des moyens 39 de compliance. La compliance 39 est fixée sur une face interne du quadripode 32 et sur un élément annulaire 24 de la tige 28.

Ces moyens 39 de compliance sont en matériau souple ou au moins déformable, aptes à corriger les erreurs de positionnement et d'orientation du quadripode 32 dues aux contraintes et aux forces qui s'exercent sur lui. Par conséquent, la course et l'effort du quadripode 32 sont dimensionnés par rapport à ces moyens 39 de compliance. Les caractéristiques des moyens 39 de compliance sont déterminées de sorte que le degré de liberté du quadripode est faible suivant l'axe Z du vérin 26. Dans un mode de réalisation, les moyens 39 de compliance sont un ressort de compression.

Lorsque le quadripode 32 entre en contact avec la surface de la pièce 11, le déplacement de la tige 28 suivant l'axe Z entraîne une compression des moyens 39 de compliance entre l'élément annulaire 24 et le quadripode 32. Cette compression permet un effet de glissement du pied 38 du quadripode 32, qui est en contact avec la surface de la pièce 11, jusqu'à une position d'équilibre où au moins trois des pieds 38 dudit quadripode touchent la surface de la pièce 11.

Le dispositif de vérin 25 comporte des moyens 40 de pivotement de l'axe Z de la tige 28. Ces moyens 40 de pivotement sont illustrés schématiquement à la figure 4. Ils comportent un disque 41 monté concentriquement sur le corps 26 du vérin 25. Le disque 41 est couplé au vérin 25 par un premier axe θ pivot fixe par rapport au corps 26 du vérin et un second axe β pivot fixe par rapport au disque 41, les deux axes θ et β étant sécants, et dans l'exemple orthogonaux. Le disque 41 est monté pivotant par rapport à l'axe θ sur un support 68 du vérin 25. Ce support 68 est destiné à s'emboîter dans le chariot 19. Le vérin 25 peut ainsi pivoter librement par rapport au support 68.

L'angle de pivotement du vérin 25 par rapport au support 68 autour de l'axe β est limité par des moyens de centrage. Dans un mode de réalisation ces moyens de centrage comportent un premier moyen 42 de centrage de l'axe Z. Dans un mode de réalisation, le premier moyen 42 comporte une première fourche montée sur le disque 41 suivant l'axe β. Les deux branches de la fourche enserrent un plot 43 de centrage fixé sur le corps 26 du vérin 25. De même, l'angle de pivotement du vérin 25 par rapport au support 68 autour de l'axe θ est limité par un second moyen 44 de centrage de l'axe Z. dans un mode de réalisation, le second moyen 44 comporte une seconde fourche montée sur le support 68 suivant l'axe θ. Les deux branches de la fourche enserrent un plot 45 de centrage monté sur un bras 46 fixé sur le disque 41.

La raideur des fourches est déterminée de sorte à compenser les effets de gravité variant selon l'orientation spatiale de la grille 10 sur la pièce 11. Sous l'effet de la gravité, les plots 43 et 45 de centrage écartent respectivement les deux branches de la fourche, dès que la raideur est atteinte, de sorte à limiter respectivement le pivotement du vérin 25 autour de l'axe β et autour de l'axe θ tout en conservant l'angle initial séparant ces deux axes. En compensant les effets de gravité, les moyens 43 et 45 de centrage maintiennent l'axe Z centré.

La figure 5 montre une représentation schématique de la machine 21 d'outillage montée sur le chariot 19 où le vérin 25 pivote par rapport au support 68 selon les deux axes θ et β de pivotement.

La figure 2 montre le dispositif 25 de vérin en position rétractée où le piston 27 est en position de repos. Dans cette position, les fourches des moyens 43 et 45 de centrage ceinturent respectivement les plots 42 et 45 de centrage. Le piston 27 reste à cette position de repos tant que la position de verrouillage n'est pas atteinte.

La figure 3 montre le dispositif 25 de vérin en position de sortie où le piston 27 est en position de travail. Dans cette position de travail, le piston 27 se déplace dans le cylindre du vérin 26 sous l'action d'une pression pneumatique. Les fourches des moyens 42 et 44 de centrage de l'axe Z s'écarte afin de compenser les effets de gravité dus par la position de la machine 21 d'outillage qui n'est pas verticale.

La figure 7 montre une représentation schématique d'une vue éclatée de la machine d'outillage et de la grille 10 commandée par l'unité 34 de traitement. L'unité de traitement 34 communique avec la grille 10 et la machine 21 d'outillage à travers un bus 49 de communication. Le bus 49 de communication peut être notamment un réseau radioélectrique permettant une liaison sans fil ou des fibres optiques ou des câbles dans lesquels circulent des signaux électriques ou des ondes radios.

L'unité de traitement 34 est un ensemble de ressources, mémoires et processeurs dans un environnement multitâche. Il peut être également une machine complète réelle ou virtuelle dans une grappe de machines. L'unité de traitement 34 peut être un appareil portatif comportant des moyens en ressources, mémoires et processeur aptes à exécuter le procédé de positionnement de l'invention. Dans un mode de réalisation, l'unité de traitement 34 est un téléphone mobile.

Dans un mode de réalisation préféré, l'unité de traitement 34 est un ordinateur central de gestion du processus de perçage. Elle comporte en particulier, mais de manière non limitative, un microprocesseur 51, une mémoire 52 de programme et une mémoire 53 de données, interconnectés par un bus 54 bidirectionnel de communication interne.

L'unité 34 de traitement comporte des circuits 50 d'interface qui réalisent la conversion entre les signaux du bus 54 interne et les signaux reçus du bus 49 externe de l'ensemble d'usinage.

La mémoire 53 de données est, par exemple, structurée en une table. Par exemple chaque ligne de la table correspond à une cellule d'avion en cours d'assemblage, chaque colonne de la table correspond à un renseignement sur cette cellule. Ainsi la mémoire 53 de données comporte une ligne 53a correspondant à une pièce 11 donnée à percer, une colonne 53b correspondant aux coordonnées de la pièce 11 déterminées de sorte à former une cartographie selon un axe de référence, une colonne 53c correspondant aux coordonnées d'un masque 55 de perçage. Ce masque 55 de perçage est un motif prédéterminé destiné à définir très précisément la position des trous 56 à réaliser sur la pièce 11. Les coordonnées de chaque trou 56 sont définies à l'avance selon le même référentiel que celui de la cartographie. La superposition du masque 55 avec la cartographie permet à un opérateur de visualiser sur un écran 57 la répartition des trous 55 à réaliser sur la pièce 11. La connaissance de la pièce 11 permet d'extraire de la table et d'afficher sur l'écran 57 sa cartographie et le masque 55 de perçage associé.

L'écran 57 peut être intégré à l'unité de traitement 34 ou déporté, par exemple, au niveau du chariot 19.

Ces données enregistrées dans la mémoire 53 de données sont obtenues au préalable car les emplacements des trous à usiner, leur diamètre et accessoirement la profondeur à percer, sont des données de constructions.

Dans la description, on prête des actions à des appareils ou à des programmes, cela signifie que ces actions sont exécutées par un microprocesseur de cet appareil ou de l'appareil comportant le programme, ledit microprocesseur étant alors commandé par des codes instructions enregistrés dans une mémoire de l'appareil. Ces codes instructions permettent de mettre en oeuvre les moyens de l'appareil et donc de réaliser l'action entreprise.

La mémoire 52 de programmes est divisée en plusieurs zones, chaque zone correspondant à une fonction ou à un mode de fonctionnement du programme du procédé de l'invention. De même, lorsque l'on prête une action à un programme, cette action correspond à la mise en oeuvre par un microprocesseur, connecté à une mémoire dans laquelle est enregistré le programme, de tout ou partie des codes instructions formant ledit programme.

Seules les zones de la mémoire 52 intéressant le plus directement l'invention sont représentées.

Une zone 60 comporte des codes instructions pour recevoir un signal correspondant à la saisie d'une requête de perçage d'un type de cellule d'avion. Cette saisie peut être effectuée en appuyant sur des commandes, associées chacune à une cellule d'avion donnée, à l'aide d'un écran tactile ou d'un clavier. Dès la réception du signal, les codes instructions de la zone 60 extraient de la mémoire 53 de données la cartographie de la pièce 11 et le masque associé puis ils affichent leur superposition sur l'écran 57.

Une zone 61 comporte des codes instructions pour effectuer une corrélation entre les points de la structure 11 réelle et ceux de la cartographie extraite. Cette corrélation est effectuée à partir de données de calibrage fournies par exemple par une caméra ou un télémètre, dans le référentiel de la grille. Il est utilisé des méthodes de calibrage connues pour d'une part relier les coordonnées spatiales d'un point de la structure 11 réel avec le point associé dans l'image prise par la caméra, et d'autre part, associer lesdits points aux coordonnées de la cartographie extraite. En résultat, le référentiel de la pièce 11 est déterminé dans le repère de la grille de sorte que la géométrie de la pièce réelle 11 soit assimilée à celle de sa cartographie extraite.

Une zone 62 comporte des codes instructions pour déterminer pour chaque point de perçage 56 de la pièce 11 un point de verrouillage 58, situé sur le plan de la grille 10, qui lui est associé. Ce point de verrouillage 58 est la position à laquelle le chariot 19 est verrouillé sur la grille 11 et le vérin 26 est actionné.

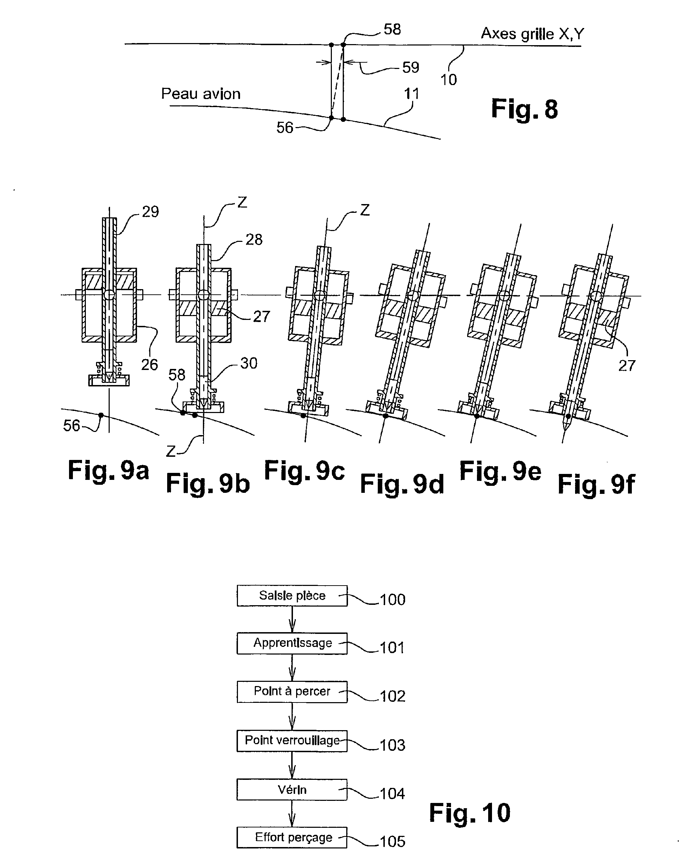

La figure 8 montre une représentation schématique du point de verrouillage 58 par rapport au point de perçage 56. La distance 59 séparant le point de verrouillage 58 du point de perçage 56 dans le repère de la grille est déterminée de sorte que la projection normale du point 58 à la surface de la pièce 11 soit le centre du point de perçage 56. Pour ce faire, les moyens 39 de compliance et le les moyens 40 de pivotement de l'axe Z sont dimensionnés de sorte à obtenir sensiblement cette distance 59 de projection. Par conséquent, pour réaliser un alésage au point de perçage 56 dont l'axe Z de perçage est perpendiculaire à la surface de la pièce 11, la machine 21 d'outillage entre en contact avec la pièce 11 par le point de verrouillage 58.

Dans un mode de réalisation préféré, l'unité de traitement 34 calcule au préalable pour chaque point de perçage 56 le point de verrouillage 58 associé, et l'enregistre dans la mémoire 53 de données.

Dans une variante, le point de verrouillage 58 est calculé par l'unité de traitement 34, lorsqu'elle reçoit une consigne de déplacement du chariot à un point de perçage 56 donné.

Une zone 63 comporte des codes instructions pour commander les moyens de verrouillage en une position verrouillée, lorsque le point de verrouillage 58 est atteint par le chariot 19.

Une zone 64 comporte des codes instructions pour alimenter le vérin pneumatique, lorsque les moyens de verrouillage sont activés.

Une zone 65 comporte des codes instructions pour commander l'application d'une pression déterminée au vérin afin d'appliquer un effort de perçage à la pièce 11.

Une zone 65 comporte des codes instructions pour commander la rotation de la tige 29 centrale munie de la tête 30 d'alésage.

La représentation des mémoires de l'unité de traitement n'est qu'une illustration d'implantation de composants et d'enregistrement de données. Dans la pratique, ces mémoires sont unifiées ou distribuées selon des contraintes de taille de la base de données et/ou de rapidité des traitements souhaités.

Les figures 9 et 10 montrent une illustration d'étapes de fonctionnement de la machine 21 d'outillage, selon un mode de réalisation de l'invention. La figure 10 montre une étape 100 préliminaire dans laquelle l'unité de traitement reçoit une requête de perçage d'une pièce 11 de l'avion. Cette requête correspond à une saisie et validation d'une consigne (bouton) de pièce à percer sur l'interface de saisie de l'unité 34 de traitement.

A une étape 101, l'unité de traitement, à l'aide de méthodes de calibrage connues, effectue une séquence d'apprentissage des coordonnées de la pièce 11 de sorte à superposer la pièce 11 réelle avec sa cartographie, obtenant en sortie une image calibrée de la pièce 11. L'unité de traitement affiche sur l'écran 57 l'image calibrée de la pièce 11 superposée au masque de perçage associé.

A une étape 102, l'unité de traitement reçoit les coordonnées du point de perçage 56. L'unité de traitement détermine la position de la grille par rapport à la cartographie de la pièce, à partir de données fournies par des capteurs de position installés sur l'unité de translation en X et/ou sur l'unité de translation en Y. Ces capteurs de position peuvent être un capteur linéaire magnétostrictif, à potentiomètre, inductif, ou tout autre type de capteur de position.

L'unité de traitement 34 détermine ou prélève de la mémoire de données, à une étape 103, le point de verrouillage 58 à associer à ce point de perçage 56. Puis, elle envoie des instructions de déplacement du chariot aux unités de translation en X et en Y à destination du point de verrouillage 58.

L'unité de traitement commande le déplacement du chariot suivant les axes x et y en fonction des informations de guidages calculées. Ces informations de guidage sont la direction et/ou la distance relative entre la position courante de la grille et le point de verrouillage 58 et/ou la vitesse de déplacement du chariot. Les informations de guidage sont calculées de façon sensiblement continue. Ces informations de guidage peuvent être affichées sur l'écran de manière sensiblement simultané et continu. Dans un exemple, sont affichées sur l'écran la position courante de la grille et/ou la position de perçage 56 et/ou la position de verrouillage 58 et/ou ou la direction suivant laquelle la machine d'outillage doit être déplacée. A l'étape illustrée à la figure 9a, le point de verrouillage 58 est atteint par le chariot 19 et les moyens de verrouillage du chariot sont mis en position verrouillée.

Dès que le chariot 19 est verrouillé sur la grillé 10, le piston 27 est déplacé dans le cylindre du vérin 26 sous l'action d'une pression commandée par l'unité de traitement, à une étape 104.

Comme le montre la figure 9b, le piston est déplacé en position basse entraînant le déplacement en translation de l'axe Z du vérin qui s'approche de ce fait de la surface à percer. Comme le montre la figure 9c, lorsque deux des quatre pieds du quadripode touchent la surface de la pièce, et tout en poursuivant le déplacement du piston 27 en translation, une rotation instantanée du dispositif 25 de vérin se produit selon les deux axes θ et β pivots implantés sur le corps du vérin 26.

Comme le montre les figure 9b, 9c et 9d, la rotation du dispositif 25 de vérin force, par effet de glissement des deux pieds 38 sur la surface de la pièce 11, à orienter le dispositif 25 de vérin en position normale par rapport à la surface de la pièce 11.

Comme le montre la figure 9e, le vérin poursuit sa course suivant l'axe Z jusqu'à comprimer les moyens de compliance 9 du quadripode 32. Lorsque le vérin 26 arrive en contact avec la surface de la pièce 11, l'unité de traitement 34 commande l'application d'une pression au vérin 26 de sorte à exercer sur la surface de la pièce un effort normal de compression prédéfini nécessaire pour garantir le perçage sans bavure à l'inter tôle. En effet, l'interface d'assemblage doit normalement être exempte de toute bavure et de tous copeaux sous peine de réduire les caractéristiques de tenue en fatigue des pièces ainsi assemblées. En outre, cet effort de compression permet d'assurer la continuité mécanique de transmission des efforts dans les pièces assemblés du fait qu'il permet que le contact entre les deux pièces au niveau de chaque organe de fixation soit un contact métal-métal.

Dans un mode de réalisation privilégié, l'effort de compression est appliqué à l'aide de la pression pneumatique du vérin 26. Cet effort est de l'ordre de 60 daN sous 6 bars.

Le vérin 26 est ainsi piloté en tout ou rien : position haute, lorsque les moyens de verrouillage sont en position déverrouillée, et position basse, lorsque les moyens de verrouillage sont en position verrouillée.

L'invention permet ainsi à une machine d'outillage munie d'un seul vérin :
- d'effectuer des mouvements de translation en X, Y et vertical en Z,
- d'aligner l'axe Z à la normale de la pièce sans un asservissement dynamique, et
- d'exercer une pression de perçage à la pièce.

La présente invention ne se limite pas aux modes de réalisation ci-dessus décrits. Bien des variantes de réalisation sont possibles sans sortir du cadre défini par les revendications annexées

En particulier, La forme et les dimensions des moyens 40 de pivotement et de la quadripode 32 ne sont pas limitatives à celles de la figure 1.

En outre, un capteur de position peut être placé sur le machine 21 d'outillage afin de détecter si l'axe Z de perçage est normal par rapport au point de perçage 56. Ce capteur de position peut être un capteur linéaire magnétostrictif, à potentiomètre, inductif, ou tout autre type de capteur de position.

Ce capteur de position fournit à l'unité de traitement des données relatives à la distance séparant les pieds 38 du quadripode 32 à la surface de la pièce 11. Lorsque cette distance est égale à un seuil de normalité prédéfini, alors l'unité de traitement 34 commande l'application de la pression au vérin 26 afin d'exercer l'effort de compression requise pour le perçage.

La présente invention permet ainsi un ensemble d'usinage d'effectuer un processus de perçage d'une plaque à grande densité de perforations qui élimine les inconvénients des techniques connues en permettant une possibilité de perçage aussi bien de surfaces planes que de surfaces courbes, convexes ou concaves, une parfaite maîtrise de la géométrie et du diamètre des trous et une absence d'efforts déformants.

## Revendications

1. Dispositif (25) de vérin comportant un corps (26) de vérin et une tige (28) solidaire d'un piston (27) mobile en translation suivant un axe Z de translation, comprenant
- des moyens (40) de pivotement de l'axe Z autour des deux axes pivots sécants (θ,β) montés sur le corps du vérin,
- un multipode (32), destiné à entrer en contact avec une surface d'une structure (11),
- ledit multipode étant positionné par rapport à la tige du vérin de sorte à ce que ledit multipode et ladite tige demeurent coaxiaux,
- le multipode étant en outre couplé à la tige par l'intermédiaire de moyens (39) de compliance, selon l'axe Z, **caractérisé en ce que**
- lors d'un déplacement du piston suivant l'axe Z, le multipode est configuré pour entrer en contact avec une surface de la structure par au moins un de ses pieds, les moyens de pivotement et les moyens de compliance sont configurés pour faire pivoter le vérin autour d'au moins un point de contact et aligner l'axe Z à la normale de la surface, par un contact entre au moins trois pieds du multipode et la surface de la structure.

2. Dispositif de vérin selon la revendication précédente, dans lequel les moyens de pivotement comportent un disque (41) monté concentriquement sur le corps du vérin, ledit disque étant couplé au vérin par le premier axe pivot fixe par rapport audit corps du vérin et par le second axe pivot fixe par rapport audit disque, ledit disque est monté en pivotant sur un support (68) du vérin par rapport au premier axe.

3. Dispositif de vérin selon la revendication précédente, comportant en outre des moyens de centrage (42, 43, 44, 45, 46) configurés de sorte à limiter l'angle de pivotement du vérin par rapport au support du vérin afin de maintenir l'axe Z centré, quelle que soit l'orientation spatiale dudit dispositif.

4. Dispositif de vérin selon la revendication précédente, dans lequel les moyens de centrage comportent :
- une fourche montée sur le support suivant le premier axe pivot fixe, ladite fourche comportant deux branches enserrant un plot de centrage monté sur un bras fixé sur le disque,
- une fourche montée sur le disque suivant le second axe pivot fixe, ladite fourche comportant deux branches enserrant un plot de centrage fixé sur le corps du vérin.

5. Dispositif de vérin selon l'une des revendications précédentes, dans lequel les moyens de compliance sont en matériau souple ou au moins déformable du type ressorts de compression.

6. Dispositif de vérin selon l'une des revendications précédentes, dans lequel le multipode est un quadripode dont les pieds (38) sont en téflon.

7. Actionneur comportant un dispositif de vérin configuré selon l'une des revendications précédentes.

8. Ensemble (1) d'usinage pour l'exécution d'une multiplicité de trous, chacun à un emplacement déterminé dans une surface d'une structure (11), telle que cellule d'avion en cours d'assemblage, comportant :
- une grille (10) de perçage apte à être solidarisée à la structure en position repérée, ladite grille comportant un chariot (19), une unité de translation en Y asservie en position assurant un mouvement libre en translation du chariot suivant une première direction dite axe y, une unité de translation en X asservie en position assurant un mouvement libre en translation de l'unité de translation en Y et du chariot suivant une seconde direction dite axe x, l'axe x et l'axe y étant sécants, des moyens de verrouillage des mouvements libres de translation respectivement suivant l'axe x et suivant l'axe y,
- une machine (21) d'outillage monté sur ledit chariot,
**caractérisé en ce que** la machine d'outillage comporte un dispositif (25) de vérin configuré selon l'une des revendications précédentes de sorte à aligner l'axe Z de translation du vérin confondu avec l'axe de perçage à la normale de la surface de la structure.

9. Ensemble d'usinage selon la revendication précédente, dans lequel la tige du vérin comporte un corps cylindrique creux traversé par une tige centrale (29) présentant un tête d'usinage (30).

10. Procédé de positionnement à la normale d'un axe de translation du dispositif de vérin sur la surface de la structure, selon l'une des revendications précédentes, dans lequel :
- on déplace le dispositif de vérin en translation suivant l'axe Z,
- une rotation instantanée du dispositif de vérin se produit selon les deux axes pivots, lorsqu'au moins deux des pieds du quadripode sont en contact avec la surface de la structure,
- cette rotation force, par effet de glissement des deux pieds en contact, l'orientation de l'axe Z à la normale de la surface de la structure.

11. Procédé selon la revendication précédente, dans lequel
- on détermine (102) des emplacements des points de perçage sur la structure,
- on détermine (103) pour chaque point de perçage un point de verrouillage associé dont sa projection normale, de la grille de perçage sur la surface de la structure, est le centre dudit point de perçage,
- le point de verrouillage est la position du chariot où les moyens de verrouillage sont en position dite position verrouillée dans laquelle le mouvement suivant les axes x et y sont bloqués,
- on guide le chariot à la position de verrouillage, puis on déplace (104) le dispositif de vérin en translation suivant l'axe Z.

12. Procédé selon l'une des revendications 10 et 11, dans lequel
- on applique (105) un effort de compression prédéfini, avant l'étape de perçage et lorsque l'axe Z est à la normale du point de perçage, de sorte à garantir un perçage sans bavure.

## Patentansprüche

1. Zylindervorrichtung (25), umfassend einen Zylinderkörper (26) und eine Stange (28), die mit einem Kolben (27) verbunden ist, der entlang einer Übersetzungsachse Z translatorisch verschiebbar ist, umfassend
- Schwenkmittel (40) der Achse Z um zwei sich schneidende Schwenkachsen (θ, β), die auf dem Zylinderkörper angeordnet sind,
- einen Multipod (32), der dazu bestimmt ist, mit einer Fläche einer Struktur (11) in Kontakt zu kommen,
- wobei der Multipod in Bezug auf die Zylinderstange derart angeordnet ist, dass der Multipod und die Stange koaxial bleiben,
- wobei der Multipod zudem mit der Stange über Nachgiebigkeitsmittel (39) entlang der Achse Z verbunden ist, **dadurch gekennzeichnet, dass**
- bei einer Verschiebung des Kolbens entlang der Achse Z der Multipod konfiguriert ist, um mit einer Fläche der Struktur durch mindestens einen seiner Füße in Kontakt zu kommen, wobei die Schwenkmittel und die Nachgiebigkeitsmittel konfiguriert sind, um den Zylinder um mindestens einen Kontaktpunkt zu drehen und die Achse Z durch einen Kontakt zwischen mindestens drei Füßen des Multipods und der Fläche der Struktur an die Normale der Fläche anzupassen.

2. Zylindervorrichtung nach dem vorhergehenden Anspruch, wobei die Schwenkmittel eine Scheibe (41) aufweisen, die konzentrisch auf dem Zylinderkörper angebracht ist, wobei die Scheibe mit dem Zylinder durch die erste feste Schwenkachse gegenüber dem Zylinderkörper und durch die zweite feste Schwenkachse gegenüber der Scheibe verbunden ist, wobei die Scheibe schwenkbar auf einer Stütze (68) des Zylinders gegenüber der ersten Achse angebracht ist.

3. Zylindervorrichtung nach dem vorhergehenden Anspruch, die zudem Zentriermittel (42, 43, 44, 45, 46) aufweist, die konfiguriert sind, um den Schwenkwinkel des Zylinders gegenüber der Stütze des Zylinders zu begrenzen, um die Achse Z unabhängig von der räumlichen Ausrichtung der Vorrichtung zentriert zu halten.

4. Zylindervorrichtung nach dem vorhergehenden Anspruch, wobei die Zentriermittel Folgendes aufweisen:
- eine Gabel, die auf dem Träger entlang der ersten festen Schwenkachse angeordnet ist, wobei die Gabel zwei Arme aufweist, die einen Zentrierstift einspannen, der auf einem Arm angeordnet ist, der auf der Scheibe befestigt ist,
- eine Gabel, die auf der Scheibe entlang der zweiten festen Schwenkachse angeordnet ist, wobei die Gabel zwei Arme aufweist, die einen Zentrierstift einspannen, der auf dem Zylinderkörper befestigt ist.

5. Zylindervorrichtung nach einem der vorhergehenden Ansprüche, wobei die Nachgiebigkeitsmittel aus einem flexiblen oder mindestens verformbaren Material von dem Typ der Druckfedern sind.

6. Zylindervorrichtung nach einem der vorhergehenden Ansprüche, wobei der Multipod ein Quadripod ist, dessen Füße (38) aus Teflon sind.

7. Stellglied, das eine Zylindervorrichtung aufweist, die nach einem der vorhergehenden Ansprüche konfiguriert ist.

8. Bearbeitungsanordnung (1) zum Ausführen von einer Vielzahl von Löchern jeweils an einer bestimmten Stelle in einer Fläche einer Struktur (11), wie einer Flugzeugzelle während der Montage, umfassend:
- eine Bohrschablone (10), die geeignet ist, an markierter Stelle an der Struktur befestigt zu werden, wobei die Schablone einen Schlitten (19), eine Verschiebeeinheit in Y, die in einer Position geregelt ist, die eine freie Translationsbewegung des Schlittens entlang einer ersten Richtung, der y-Achse, garantiert, eine Verschiebeeinheit in X, die in einer Position geregelt ist, die eine freie Translationsbewegung der Verschiebeeinheit in Y und des Schlittens entlang einer zweiten Richtung, der x-Achse, garantiert, wobei sich die x-Achse und die y-Achse schneiden, Verriegelungsmittel der freien Translationsbewegungen jeweils entlang der x-Achse und der y-Achse aufweist,
- eine Werkzeugmaschine (21), die auf dem Schlitten angeordnet ist,
**dadurch gekennzeichnet, dass** die Werkzeugmaschine eine Zylindervorrichtung (25) aufweist, die nach einem der vorhergehenden Ansprüche konfiguriert ist, um die Übersetzungsachse Z des Zylinders auszurichten, die mit der Achse der Bohrung an der Normalen der Fläche der Struktur zusammenfällt.

9. Bearbeitungsanordnung nach dem vorhergehenden Anspruch, wobei die Zylinderstange einen hohlen zylindrischen Körper aufweist, durch den eine mittlere Stange (29) durchgeht, die einen Bearbeitungskopf (30) aufweist.

10. Verfahren zur Normalpositionierung einer Übersetzungsachse der Zylindervorrichtung an der Fläche der Struktur nach einem der vorhergehenden Ansprüche, wobei:
- die Zylindervorrichtung in Translation entlang der Achse Z verschoben wird,
- eine unmittelbare Drehung der Zylindervorrichtung entlang den zwei Schwenkachsen erfolgt, wenn mindestens zwei der Füße des Quadripods in Kontakt mit der Fläche der Struktur stehen,
- diese Drehung durch die Gleitwirkung der zwei Füße, die in Kontakt stehen, die Ausrichtung der Achse Z an der Normalen der Fläche der Struktur erzwingt.

11. Verfahren nach dem vorhergehenden Anspruch, wobei
- die Stellen der Bohrpunkte auf der Struktur bestimmt werden (102),
- für jeden Bohrpunkt ein zugeordneter Verriegelungspunkt bestimmt wird (103), dessen Normalprojektion der Bohrschablone auf der Fläche der Struktur der Mittelpunkt des Bohrpunktes ist,
- der Verriegelungspunkt die Position des Schlittens ist, wo sich die Verriegelungsmittel in der sogenannten verriegelten Position befinden, in der die Bewegung entlang der Achse x und der Achse y blockiert ist,
- der Schlitten in die Verriegelungsposition geführt wird und dann die Zylindervorrichtung in Translation entlang der Achse Z verschoben wird (104).

12. Verfahren nach einem der Ansprüche 10 und 11, wobei
- eine vorbestimmte Druckkraft vor dem Schritt des Bohrens und wenn sich die Achse Z an der Normalen des Bohrpunktes befindet, angewendet wird (105), um ein Bohren ohne Bohrgrat zu garantieren.

## Claims

1. Cylinder device (25) having a cylinder body (26) and a rod (28) secured to a piston (27) which can move translationally along a translation axis Z, comprising
- means (40) for pivoting the Z axis about two secant pivot axes (θ,β) mounted on the body of the cylinder,
- a multiped (32) intended to come into contact with a surface of a structure (11),
- the said multiped being positioned with respect to the rod of the cylinder such that the said multiped and the said rod remain coaxial,
- the multiped being additionally coupled to the rod via compliance means (39), along the Z axis,
**characterized in that**
- during a movement of the piston along the Z axis, the multiped is configured to come into contact with a surface of the structure by at least one of its feet, and the pivoting means and the compliance means are configured to pivot the cylinder about at least one point of contact and to align the Z axis to the normal of the surface, by contact between at least three feet of the multiped and the surface of the structure.

2. Cylinder device according to the preceding claim, in which the pivoting means comprise a disc (41) mounted concentrically on the body of the cylinder, the said disc being coupled to the cylinder by the first pivot axis fixed with respect to the said body of the cylinder and by the second pivot axis fixed with respect to the said disc, the said disc being pivotably mounted on a support (68) of the cylinder with respect to the first axis.

3. Cylinder device according to the preceding claim, additionally comprising centring means (42, 43, 44, 45, 46) configured so as to limit the pivoting angle of the cylinder with respect to the support of the cylinder in order to keep the Z axis centred, whatever the spatial orientation of the said device.

4. Cylinder device according to the preceding claim, in which the centring means comprise:
- a fork mounted on the support along the first fixed pivot axis, the said fork comprising two branches enclosing a centring pin mounted on an arm fixed to the disc,
- a fork mounted on the disc along the second fixed pivot axis, the said fork comprising two branches enclosing a centring pin fixed to the body of the cylinder.

5. Cylinder device according to one of the preceding claims, in which the compliance means are made of flexible material or are at least deformable of the compression spring type.

6. Cylinder device according to one of the preceding claims, in which the multiped is a quadruped whose feet (38) are made of Teflon.

7. Actuator comprising a cylinder device configured according to one of the preceding claims.

8. Machining assembly (1) for executing a multiplicity of holes, each at a defined location in a surface of a structure (11), such as an aircraft cell in the course of assembly, comprising:
- a drilling grid (10) able to be secured to the structure in the referenced position, the said grid comprising a carriage (19), a Y translation unit slaved in position ensuring a free translational movement of the carriage in a first direction, termed y axis, an X translation unit slaved in position ensuring a free translational movement of the Y translation unit and of the carriage in a second direction, termed x axis, the x axis and the y axis being secant, and means for locking the free translational movements respectively along the x axis and along the y axis,
- a machine tool (21) mounted on the said carriage,
**characterized in that** the machine tool comprises a cylinder device (25) configured according to one of the preceding claims so as to align the Z axis of translation of the cylinder coincident with the drilling axis to the normal of the surface of the structure.

9. Machining assembly according to the preceding claim, in which the rod of the cylinder comprises a hollow cylindrical body traversed by a central rod (29) having a machining head (30).

10. Method for positioning to the normal a translation axis of the cylinder device on the surface of the structure, according to one of the preceding claims, in which:
- the cylinder device is moved translationally along the Z axis,
- an instantaneous rotation of the cylinder device takes place along the two pivot axes when at least two of the feet of the quadruped are in contact with the surface of the structure,
- this rotation forces, by a sliding effect of the two feet in contact, the Z axis to be oriented to the normal of the surface of the structure.

11. Method according to the preceding claim, in which
- locations of the drilling points on the structure are determined (102),
- there is determined (103) for each drilling point an associated locking point whose normal projection, from the drilling grid on the surface of the structure, is the centre of the said drilling point,
- the locking point is the position of the carriage where the locking means are in a position, termed locked position, in which the movement along the x and y axes are blocked,
- the carriage is guided to the locking position and then the cylinder device is moved (104) translationally along the Z axis.

12. Method according to either of Claims 10 and 11, in which
- a predefined compression force is applied (105), before the drilling step and when the Z axis is to the normal of the drilling point, so as to guarantee a drilling without burrs.
